(19) Europäisches Patentamt
European Patent Office
Office européen des brevets

(11) **EP 3 406 392 B1**

(12) **EUROPÄISCHE PATENTSCHRIFT**

(45) Veröffentlichungstag und Bekanntmachung des Hinweises auf die Patenterteilung:
**23.11.2022   Patentblatt 2022/47**

(21) Anmeldenummer: **18173136.5**

(22) Anmeldetag: **18.05.2018**

(51) Internationale Patentklassifikation (IPC):
**B23K 26/354** *(2014.01)*      **B23K 26/352** *(2014.01)*
**B23K 26/0622** *(2014.01)*     **B23K 26/12** *(2014.01)*
**B23K 26/082** *(2014.01)*

(52) Gemeinsame Patentklassifikation (CPC):
**B23K 26/3576; B23K 26/0624; B23K 26/082;**
**B23K 26/123; B23K 26/354**

(54) **VERFAHREN ZUR VERRINGERUNG DER REIBUNG ANEINANDER GLEITENDER UND/ODER ROLLENDER FLÄCHEN**

METHOD OF REDUCING FRICTION BETWEEN AREAS SLIDING AND/OR ROLLING AGAINST EACH OTHER

PROCÉDÉ DE RÉDUCTION DU FROTTEMENT DE SURFACES GLISSANTES ET/OU ROULANTES LES UNES PAR RAPPORT AUX AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2017   DE 102017208616**

(43) Veröffentlichungstag der Anmeldung:
**28.11.2018   Patentblatt 2018/48**

(73) Patentinhaber: **Fraunhofer-Gesellschaft zur Förderung**
**der angewandten Forschung e.V.**
**80686 München (DE)**

(72) Erfinder:
• **Nüsser, Christian**
  **41462 Neuss (DE)**
• **Willenborg, Edgar**
  **52146 Würselen (DE)**

(74) Vertreter: **Gagel, Roland**
**Patentanwaltskanzlei**
**Dr. Roland Gagel**
**Landsberger Strasse 480 a**
**81241 München (DE)**

(56) Entgegenhaltungen:
EP-A1- 2 965 854         WO-A1-2013/010876
DE-A1-102012 219 934     US-A1- 2006 081 573

## Beschreibung

### Technisches Anwendungsgebiet

Die vorliegende Erfindung betrifft ein Verfahren zur Verringerung der Reibung aneinander gleitender und/oder rollender Flächen, bei dem wenigstens eine der Flächen eine metallische Fläche ist, die zum Beispiel durch Schleifen, Fräsen oder Erodieren eine Mikrorauheit mit Rauheitskanten und/oder Rauheitsspitzen aufweist, wobei die metallische Fläche vor einem Einsatz einer Bearbeitung mit energetischer Strahlung unterzogen wird, gemäß dem Oberbegriff des Anspruchs 1, w. z.B. aus DE 10 2012 219934 bekannt.

In zahlreichen technischen Bereichen finden dynamische Prozesse statt, bei denen Flächen unterschiedlicher Komponenten aneinander gleiten und/oder rollen und dadurch Reibungsverluste verursachen. Beispiele sind Getriebe mit den darin eingesetzten Zahnrädern oder auch Lagerungen oder Ketten, bei denen jeweils zwei metallische Flächen aneinander gleiten und/oder rollen. Die dabei auftretenden Reibungsverluste sind unerwünscht und sollten möglichst niedrig gehalten werden.

### Stand der Technik

Zur Verringerung der Reibung aneinander gleitender und/oder rollender Flächen werden in der Regel Schmiermittel wie bspw. Öle oder Fette eingesetzt. Weiterhin ist es bekannt, die Rauheit der beteiligten Flächen, insbesondere metallischer Flächen, durch mechanische Bearbeitung vor dem Einsatz der Komponenten zu glätten. Hierfür werden häufig die Prozesse des Schleifens, Superfinishens und Honens eingesetzt, wie sie beispielsweise in Fritz Klocke, Wilfried König; "Fertigungsverfahren 2 - Schleifen, Honen, Läppen", 4. Auflage, Springer-Verlag Berlin Heidelberg 2005, grundlegend beschrieben sind. Durch die Bearbeitung werden zudem die tribologischen Eigenschaften der Oberfläche verbessert.

Die Aufgabe der vorliegenden Erfindung besteht darin, ein Verfahren anzugeben, mit dem sich die Reibung aneinander gleitender und/oder rollender Flächen im Falle wenigstens einer metallischen Fläche als einer der Reibungspartner weiter verringern lässt.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren wird die wenigstens eine metallische Fläche der beiden beim Einsatz aneinander gleitenden und/oder rollenden Flächen vor dem Einsatz einer Bearbeitung mit energetischer Strahlung unterzogen. Die Bearbeitung mit energetischer Strahlung wird dabei jedoch nicht zur Beseitigung der Mikrorauheit der metallischen Fläche durchgeführt. Vielmehr wird die Bearbeitung mit energetischer Strahlung so durchgeführt, dass Rauheitskanten und/oder Rauheitsspitzen der Mikrorauheit der metallischen Fläche mit der energetischen Strahlung durch nur kurzzeitiges Aufschmelzen ohne signifikanten Materialabtrag lediglich verrundet werden, ohne die Rauheitstiefe der Mikrorauheit wesentlich zu verringern.

Die Erfinder des vorgeschlagenen Verfahrens haben hierbei erkannt, dass für die Verringerung der Reibung an einer metallischen Fläche, bspw. aus einem Stahlwerkstoff, keine konventionelle, auf dem Umschmelzen mit energetischer Strahlung basierende Politur (zum Beispiel eine Laserpolitur) erforderlich ist, die ein vollständiges Umschmelzen der Oberfläche mit großer Aufschmelztiefe und damit auch eine relativ lange Bearbeitungszeit erfordert. Vielmehr ist ein nur kurzzeitiges Aufschmelzen bis zu einer Aufschmelztiefe ausreichend, die der dreifachen Rautiefe $R_z$, besonders bevorzugt der Rautiefe $R_z$ der Mikrorauheit der metallischen Fläche entspricht und lediglich zu einem Verrunden der Rauheitskanten und/oder Rauheitsspitzen führt. Auf diese Weise lässt sich der Bearbeitungsprozess in deutlich kürzerer Zeit als bei einer konventionellen Bearbeitung, wie zum Beispiel einer Laserpolitur, durchführen. Die Bearbeitung mit energetischer Strahlung erfolgt dabei vorzugsweise an einer metallischen Fläche, die bereits durch vorangegangene mechanische Bearbeitung, insbesondere durch Schleifen und/oder Honen, geglättet wurde und damit vorzugsweise einen Mittenrauwert von weniger als 2 $\mu$m, besonders bevorzugt weniger als 0,8 $\mu$m aufweist.

Das vorgeschlagene Verfahren erfordert eine gezielte Wahl der Bearbeitungsparameter, um lediglich eine Verrundung der Rauheitskanten und/oder Rauheitsspitzen zu erreichen, ohne die Strukturtiefe der Mikrorauheit wesentlich zu verändern. Diese Parameter hängen von der gegebenen Strukturtiefe, der Mikrorauheit und dem zu bearbeitenden metallischen Werkstoff ab.

Im Folgenden wird das vorgeschlagene Verfahren am Beispiel der Laserstrahlung als energetischer Strahlung im Vergleich zum herkömmlichen Laserpolieren erläutert. Die Ausführungen lassen sich jedoch analog auch auf andere Arten energetischer Strahlung wie bspw. Elektronen- oder Ionenstrahlung übertragen.

Die Modellvorstellung beim Polieren mit Laserstrahlung ist, dass die Rauheit bzw. Oberflächentopographie der zu bearbeitenden Fläche durch Fourierzerlegung als Überlagerung einzelner Ortswellenlängen beschrieben werden kann. Unterschiedliche Ortswellenlängen werden durch die Politur unterschiedlich stark geglättet. Das Glättungsverhalten kann dabei wie bei einer Schwingung als Dämpfung der verschiedenen Wellenlängen beschrieben werden. Je größer die Wellenlänge, desto mehr Zeit ist für die Glättung (= Abklingen der Wellenlänge) erforderlich. Das aufgeschmolzene Material muss im Falle größerer Wellenlängen eine größere Wegstrecke zurücklegen, was mehr Zeit in Anspruch nimmt. Bei der Politur mit Laserstrahlung steht jedoch nur ein gewisser Zeitraum für den Glättungsprozess zur Verfügung. Dieser Zeitraum wird durch die Existenzdauer der Schmelze bestimmt, d.h. durch die Zeit, in der sich das aufgeschmolzene Material im flüssigen Zustand befindet. Die Existenzdauer der Schmelze ergibt sich aus dem Temperatur-Zeit-Verlauf der zu bearbeitenden Oberfläche. Bei der Verwendung von gepulster Laserstrahlung haben die Energiedichte und die Pulsdauer den größten Einfluss auf den Temperatur-Zeit-Verlauf. Die Energiedichte entspricht dabei der auf den Flächeninhalt der Wechselwirkungszone zwischen Laserstrahl und Oberfläche bezogenen Pulsenergie. Bei der Verwendung von kontinuierlicher Laserstrahlung (cw-Laserstrahlung) wird der Temperatur-Zeit-Verlauf im Wesentlichen durch die Intensität und die Kombination aus Strahlabmessungen und Vorschubgeschwindigkeit bestimmt, mit der der Strahl, häufig mäanderförmig, über die Oberfläche geführt wird.

Da die einzelnen Aufschmelzbereiche auf der Oberfläche überlappen, bei der Verwendung von gepulster Laserstrahlung durch die Aufschmelzbereiche der einzelnen Pulse und bei der Verwendung von kontinuierlicher Laserstrahlung durch das Überlappen der einzelnen Spuren, wird jeder Punkt der Oberfläche mehr als einmal aufgeschmolzen. Die jeweilige Existenzdauer der Schmelze, durch die die Glättung der Oberfläche beeinflusst wird, ergibt sich dabei aus den kumulierten Existenzdauern der jeweiligen Einzelschmelzbäder. Die (kumulierte) Existenzdauer der Schmelze hängt damit auch von den Strahlabmessungen, der Vorschubgeschwindigkeit und dem Spurversatz ab. Diese Parameter haben jedoch in der Praxis einen deutlich geringeren Einfluss auf die Existenzdauer der Schmelze als die Parameter Energiedichte und Pulsdauer bzw. Intensität und Vorschubgeschwindigkeit.

Das vorgeschlagene Verfahren nutzt aus, dass über die Bearbeitungsparameter die Existenzdauer der Schmelze gezielt eingestellt werden kann. Die Existenzdauer der Schmelze wirkt sich wiederum darauf aus, welche Ortswellenlängen durch die Bearbeitung geglättet werden. Demnach ist es möglich, durch geeignete Wahl der Bearbeitungs- bzw. Prozessparameter zu beeinflussen, welche Ortswellenlängen der Oberfläche geglättet werden und welche im Wesentlichen unverändert bleiben. Die größte Wellenlänge, die durch die Bearbeitung geglättet wird, ist in der Literatur häufig auch als "kritische Ortswellenlänge" bezeichnet. Hierbei wird angenommen, dass dies genau diejenige Ortswellenlänge ist, deren Dämpfungszeit der kumulierten Existenzdauer der Schmelze entspricht. Die kritische Ortswellenlänge kann laut Literatur aus

$$\lambda_{krit} = \sqrt{\frac{8\pi^2 \eta t_E}{\rho}}$$

abgeschätzt werden. Dabei bedeutet $\eta$ die dynamische Viskosität der Schmelze, $t_E$ die Existenzdauer der Schmelze und $\rho$ die

Dichte des bearbeiteten Materials bzw. Werkstoffs. Die kritische Ortswellenlänge hängt demnach nicht nur von den Bearbeitungs- bzw. Prozessparametern, sondern auch von den physikalischen Eigenschaften des Werkstoffs ab.

Bei der konventionellen Laserpolitur wird eine möglichst starke Glättung der Oberfläche angestrebt, die Existenzdauer der Schmelze soll also möglichst lang sein. Die Temperatur der Schmelze muss dabei möglichst hoch liegen, ohne jedoch die Verdampfungstemperatur zu erreichen. Die Verdampfungstemperatur darf nicht überschritten werden, da durch den ansonsten auftretenden Dampfdruck eine Schmelzbaddeformation erfolgt und die Oberfläche in diesem Fall nicht geglättet wird.

Im Gegensatz zur konventionellen Laserpolitur sollen beim vorliegenden Verfahren des Kantenverrundens nur Ortswellenlängen geglättet werden, die in der Größenordnung der Kanten und/oder Spitzen des Rauheitsprofils liegen. Die kritische Ortswellenlänge liegt damit signifikant unter der kritischen Ortswellenlänge beim konventionellen Laserpolieren. Die Existenzdauer der Schmelze muss hierfür deutlich kürzer sein als eine Existenzdauer, wie sie für eine möglichst starke Glättung der Oberfläche erforderlich wäre.

Erfindungsgemäß liegt die Existenzdauer der Schmelze beim vorgeschlagenen Verfahren nur im Bereich zwischen 5 ns und 500 ns. Die Bearbeitungsparameter werden hierzu entsprechend angepasst. So wird bspw. eine gegenüber der konventionellen Laserpolitur kürzere Pulsdauer und geringere Energiedichte (bezogen auf die Politur mit gepulster Laserstrahlung) bzw. höhere Scangeschwindigkeit und geringere Intensität (bezogen auf die Politur mit kontinuierlicher Laserstrahlung) gewählt. Bevorzugte Pulsdauern liegen beim vorgeschlagenen Verfahren im Bereich zwischen 5 ns und 1 $\mu$s, besonders bevorzugt zwischen 10 ns - 250 ns. Die Strahldurchmesser betragen dabei üblicherweise ca. 150 - 500 $\mu$m, größere und kleinere Strahldurchmesser sind jedoch auch möglich. Größere Ortswellenlängen und damit die gröberen Strukturen der Rauheit sollen möglichst unverändert bleiben. Durch die geringere Wärmeeinbringung in das Werkstück nimmt beim vorliegenden Verfahren auch die Tiefe des Schmelzbads ab. Die Aufschmelztiefe ist bei dem vorgeschlagenen Verfahren im Vergleich zum konventionellen Polieren mit energetischer Strahlung sehr gering.

Bei der Politur von Werkstoffen mit Einschlüssen mittels energetischer Strahlung können die Einschlüsse während der Politur verdampfen, so dass kraterähnliche Strukturen in der Oberfläche entstehen. Die Abmessungen dieser Strukturen entsprechen dabei ungefähr den Abmessungen der Einschlüsse. Ursache für die Verdampfung der Einschlüsse ist, dass diese die energetische Strahlung häufig deutlich stärker absorbieren als der Grundwerkstoff und dadurch stark erhitzt werden oder dass die Einschlüsse eine deutlich geringere Verdampfungstemperatur als der Grundwerkstoff besitzen.

Im Extremfall ist die Verdampfungstemperatur der Einschlüsse nur geringfügig höher als die Schmelz- bzw. Liquidustemperatur des Grundwerkstoffs. Auch mit dem vorgeschlagenen Verfahren können derartige Einschlüsse durch die Bearbeitung mit energetischer Strahlung verdampfen und damit kraterähnliche Strukturen bilden. Derartige Strukturen können bei der Verwendung von Schmiermitteln in der Anwendung von Vorteil sein, da diese Oberflächendefekte bzw. Krater dann als Schmiertaschen wirken und das tribologische System verbessern können. Das Auftreten derartiger Defekte kann damit für derartige Anwendungen erwünscht sein. Die Abmessungen der Krater bzw. Schmiertaschen können durch geeignete Wahl des Werkstoffs (Größe und Verteilung der Einschlüsse) beeinflusst werden.

Das vorgeschlagene Verfahren lässt sich bei allen Anwendungen einsetzen, bei denen Oberflächen von Komponenten bzw. Werkstücken gegeneinander reiben bzw. aneinander gleiten und/oder rollen, wobei wenigstens eine der beiden Oberflächen aus einem metallischen Werkstoff besteht. Beispiele für derartige Anwendungen sind bereits in der Beschreibungseinleitung genannt. Dies ist jedoch selbstverständlich keine abschließende Aufzählung.

**Kurze Beschreibung der Zeichnungen**

Das vorgeschlagene Verfahren wird nachfolgend anhand eines Ausführungsbeispiels in Verbindung mit den Zeichnungen nochmals näher erläutert. Hierbei zeigen:

Fig. 1 eine schematische Darstellung des Temperatur-Zeit-Verlaufs beim konventionellen Laserpolieren und beim Kantenverrunden für zwei unterschiedliche Kombinationen von Energiedichte und Pulsdauer gemäß dem vorgeschlagenen Verfahren; und

Fig. 2 eine schematische Darstellung der Mikrorauheit einer metallischen Oberfläche vor und nach dem Kantenverrunden gemäß dem vorgeschlagenen Verfahren;

Fig. 3 eine beispielhafte Oberflächenrandschicht mit markierten Kanten und Spitzen in schematischer Darstellung; und

Fig. 4 eine schematische Darstellung der Situation bei aneinander gleitenden Oberflächen im Vergleich zwischen unbearbeiteten und gemäß dem vorgeschlagenen Verfahren bearbeiteten Oberflächen.

**Wege zur Ausführung der Erfindung**

Der Schritt der Bearbeitung mit energetischer Strahlung unterscheidet sich beim vorgeschlagenen Verfahren gegenüber einer konventionellen Politur mit energetischer Strahlung dadurch, dass beim vorgeschlagenen Verfahren nur ein Kantenverrunden stattfindet und damit nur Ortswellenlängen geglättet werden, die in der Größenordnung der Kanten des Rauheitsprofils liegen. Gemäß der Erfindung ist die Existenzdauer der Schmelze dazu deutlich kürzer als bei dem konventionellen Polieren mit energetischer Strahlung.

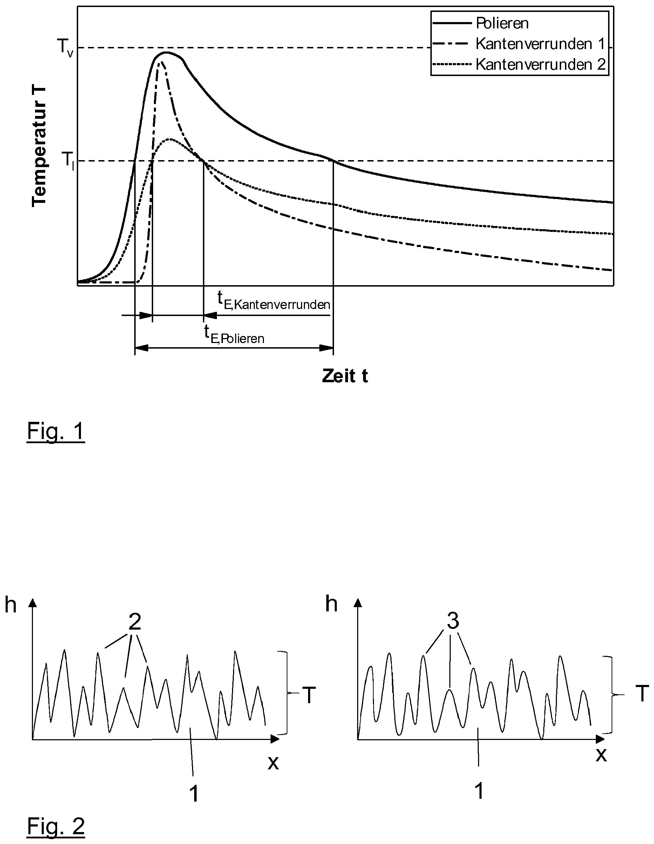

Dies ist schematisch anhand des Temperatur-Zeit-Verlaufs der Figur 1 zu erkennen. Diese Figur zeigt einen Vergleich des Temperatur-Zeit-Verlaufs beim konventionellen Laserpolieren mit dem Temperatur-Zeit-Verlauf beim vorgeschlagenen Verfahren, wobei jeweils gepulste Laserstrahlung für die Bearbeitung genutzt wird. Für das vorgeschlagene Verfahren sind dabei zwei unterschiedliche Temperatur-Zeit-Verläufe dargestellt, die sich bei der Verwendung unterschiedlicher Kombinationen von Energiedichte und Pulsdauer einstellen. Bei dem Temperatur-Zeit-Verlauf 1 wird im Vergleich zum Temperatur-Zeit-Verlauf 2 eine höhere Energiedichte und eine kürzere Pulsdauer verwendet.

Beim konventionellen Laserpolieren wird eine lange Existenzdauer der Schmelze $t_{E,Polieren}$ angestrebt, damit auch große Ortswellenlängen bei diesem Schritt geglättet werden. Hierzu muss die Laserstrahlung eine hohe Energiedichte aufweisen, die zu höheren Temperaturen der Schmelze führt, wie dies in der Figur 1 zu erkennen ist. Die hierbei erreichten Temperaturen müssen für eine ausreichend lange Zeit oberhalb der Liquidustemperatur $T_l$ des metallischen Werkstoffs, aber noch unterhalb der Verdampfungstemperatur $T_v$ dieses Werkstoffs liegen. Demgegenüber wird beim vorgeschlagenen Verfahren eine deutlich geringere Energiedichte und/oder kürzere Pulsdauer der Laserstrahlung eingesetzt, die nur zu einem kurzzeitigen Überschreiten der Liquidustemperatur $T_l$ des metallischen Werkstoffs führt. Dadurch wird eine deutlich kürzere Existenzdauer der Schmelze $t_{E,Kantenverrunden}$ erreicht, durch die lediglich die Rauheitsspitzen und Rauheitskanten verrundet werden, ohne eine Glättung auch größerer Ortswellenlängen zu bewirken. Die Tiefe T der Strukturen bleibt zu mindestens 50% erhalten.

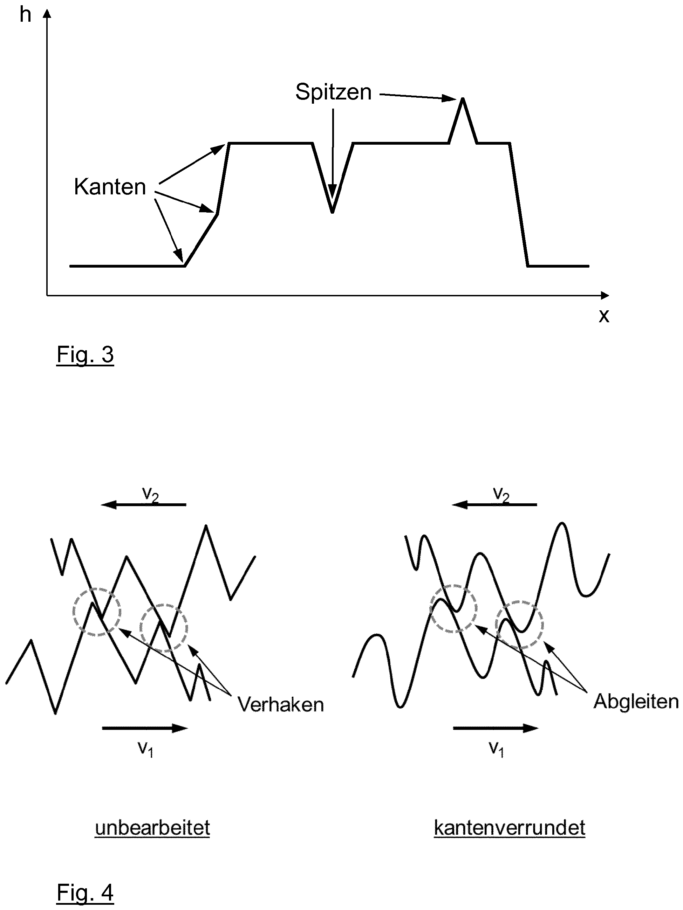

Dies ist anhand der Figur 2 schematisch dargestellt, die in der Teilabbildung A stark schematisiert die Mikrorauheit einer Oberfläche 1 mit den Rauheitsspitzen 2 im Querschnitt entlang einer Ortskoordinate x (Höhe h(x)) darstellt. Die Tiefe T dieser Mikrorauheits-Struktur ist ebenfalls angedeutet. Die Teilabbildung B zeigt diese Struktur nach Durchführung des vorgeschlagenen Verfahrens, d.h. nach dem Kantenverrunden mittels energetischer Strahlung. In dieser Figur sind deutlich die entsprechend verrundeten Spitzen 3 zu erkennen, wobei die Tiefe T der Struktur nur unwesentlich reduziert wurde. Unter den Rauheitsspitzen (und Rauheitskanten) sind hierbei Bereiche, insbesondere lokale Maxima und Minima, der Oberflächentopographie zu verstehen, die eine unstetige lokale Änderung der Steigung aufweisen. Figur 3 zeigt eine beispielhafte Oberflächenrandschicht mit unterschiedlichen Kanten und Spitzen. Bei entsprechender Einstellung der Prozess- bzw. Bearbeitungsparameter erfolgt jeweils erfindungsgemäß ein nur kurzzeitiges Aufschmelzen des metallischen Werkstoffs, wodurch automatisch die Kanten bzw. Spitzen verrundet werden. An Stellen, an denen sich keine Kanten oder Spitzen befinden, wird die Topographie nicht oder nur unwesentlich beeinflusst. Es erfolgt vor allem keine Glättung der gröberen Strukturen, die zu einer deutlichen Reduzierung der Strukturtiefe führen würde.

Ein derartiger Bearbeitungsprozess kann bspw. durch Verwendung eines Scannersystems mit einem zusätzlichen Achssystem oder auch ohne ein zusätzliches Achssystem erfolgen. Es kann sich bspw. auch um einen feststehenden Bearbeitungskopf in Verbindung mit einem Achssystem handeln. Entsprechende Bearbeitungsvorrichtungen sind aus dem Stand der Technik bekannt.

Figur 4 zeigt eine schematische Darstellung der Situation bei aneinander gleitenden Oberflächen im Vergleich zwischen unbearbeiteten und gemäß dem vorgeschlagenen Verfahren bearbeiteten Oberflächen. Die Oberflächen bewegen sich hierbei mit den Geschwindigkeiten $v_1$ und $v_2$ übereinander. Wie im linken Teil der Figur 4 zu erkennen ist, verhaken sich die aneinander gleitenden unbearbeiteten Oberflächen aufgrund der vorhandenen Kanten und Spitzen leicht ineinander. Dies führt zu entsprechender Reibung und erhöhtem Verschleiß. Im rechten Teil der Figur 4 ist diese Situation bei Oberflächen dargestellt, die gemäß dem vorgeschlagenen Verfahren bearbeitet wurden und daher verrundete Kanten und Spitzen aufweisen. Diese Verrundung der Kanten und Spitzen bewirkt, dass die beiden Oberflächen nicht mehr ineinander verhaken, sondern aufeinander abgleiten. Dadurch werden die Reibung und auch der Verschleiß der Oberflächen deutlich reduziert.

Im Folgenden werden beispielhafte Parameter für die Bearbeitung einer metallischen Fläche aus dem Stahlwerkstoff 100Cr6 angegeben:

Pulsdauer: 200 ns
Energiedichte: 2 J/cm$^2$
Vorschubgeschwindigkeit: 1000 mm/s
Spurversatz: 30 $\mu$m
Schutzgas: Argon, Stickstoff oder Helium

Bezugszeichenliste

1 Oberfläche
2 Rauheitsspitzen
3 verrundete Rauheitsspitzen

**Patentansprüche**

1. Verfahren zur Verringerung der Reibung aneinander gleitender und/oder rollender Flächen, bei dem wenigstens eine der Flächen eine metallische Fläche (1) ist, die eine Mikrorauheit mit Rauheitskanten und/oder Rauheitsspitzen (2) aufweist, und

   die wenigstens eine metallische Fläche (1) vor einem Einsatz einer Bearbeitung mit energetischer Strahlung unterzogen wird,
   **dadurch gekennzeichnet, dass**
   die Bearbeitung mit gepulster oder mit kontinuierlicher energetischer Strahlung erfolgt und Pulsdauer und Energiedichte als Prozessparameter der gepulsten energetischen Strahlung oder und Intensität und Vorschubgeschwindigkeit als Prozessparameter der kontinuierlichen energetischen Strahlung so gewählt werden, dass das Material jeweils nur für einen Zeitraum im Bereich zwischen 5 ns und 500 ns im schmelzflüssigen Zustand vorliegt, so dass nur die Rauheitskanten und/oder Rauheitsspitzen (2) der metallischen Fläche (1) mit der energetischen Strahlung durch kurzzeitiges Aufschmelzen ohne Materialabtrag lediglich verrundet werden.

2. Verfahren nach Anspruch 1,
   **dadurch gekennzeichnet,**
   **dass** die wenigstens eine metallische Fläche (1) vor der Bearbeitung mit der energetischen Strahlung mit einem mechanischen Verfahren geschliffen und/oder gehont wurde.

3. Verfahren nach einem der Ansprüche 1 oder 2,
   **dadurch gekennzeichnet,**
   **dass** die Bearbeitung mit gepulster energetischer Strahlung erfolgt, wobei die Pulsdauer und Energiedichte der energetischen Strahlung so gewählt werden, dass eine Strukturtiefe der Mikrorauheit durch die Bearbeitung um weniger als 50% verringert wird.

4. Verfahren nach einem der Ansprüche 1 oder 2,
   **dadurch gekennzeichnet,**
   **dass** die Bearbeitung mit kontinuierlicher energetischer Strahlung erfolgt, wobei die Intensität der energetischen Strahlung und die Vorschubgeschwindigkeit, mit der ein energetischer Strahl bei der Bearbeitung über die metallische Fläche (1) geführt wird, so gewählt werden, dass eine Strukturtiefe der Mikrorauheit durch die Bearbeitung um weniger als 50% verringert wird.

5. Verfahren nach einem der Ansprüche 1 bis 4,
   **dadurch gekennzeichnet,**
   **dass** als energetische Strahlung Laserstrahlung verwendet wird.

6. Verfahren nach einem der Ansprüche 1 bis 5,
   **dadurch gekennzeichnet,**

**dass** die Bearbeitung unter einem für die metallische Fläche (1) inerten Schutzgas durchgeführt wird.

## Claims

1. A method for reducing the friction of surfaces sliding and/or rolling over each other, in which at least one of the surfaces is a metallic surface (1) having a micro-roughness with roughness edges and/or roughness peaks (2), and the at least one metallic surface (1) is subjected to a processing with energetic radiation before use, **characterized in that** the processing is carried out with pulsed or with continuous energetic radiation, and pulse duration and energy density as process parameters of the pulsed energetic radiation, or intensity and feed rate as process parameters of the continuous energetic radiation are selected in such manner that in each case the material is in a molten state only for a period in the range between 5 ns and 500 ns, so that the roughness edges and/or roughness peaks (2) of the metallic surface (1) are merely rounded with the energetic radiation by brief melting, without material removal.

2. Method according to Claim 1, **characterized in that** the at least one metallic surface (1) has been ground and/or honed by a mechanical process before the processing with the energetic radiation.

3. Method according to either of Claims 1 or 2, **characterized in that** the processing is carried out with pulsed energetic radiation, wherein the pulse duration and energy density of the energetic radiation are selected such that a structural depth of the micro-roughness is reduced by less than 50% as a result of the processing.

4. Method according to either of Claims 1 or 2, **characterized in that** the processing is carried out with continuous energetic radiation, wherein the intensity of the energetic radiation and the feed rate with which an energetic beam is guided over the metallic surface (1) during the processing are selected such that a structural depth of the micro-roughness is reduced by less than 50% as a result of the processing.

5. Method according to any one of Claims 1 to 4, **characterized in that** laser radiation is used as energetic radiation.

6. Method according to any one of Claims 1 to 5, **characterized in that** the processing is carried out under a shielding gas which is inert for the metallic surface (1).

## Revendications

1. Procédé de réduction des frottements de surfaces roulant et/ou glissant les unes sur les autres, dans lesquelles au moins une des surfaces est une surface métallique (1), qui présente une microrugosité avec des bords de rugosité et/ou des pointes de rugosité (2), et la au moins une surface métallique (1) avant utilisation est soumise à un traitement avec un rayonnement énergétique, **caractérisé en ce que** le traitement est effectué avec un rayonnement énergétique pulsé ou continu et la durée d'impulsion et la densité d'énergie sont choisies comme paramètres de traitement du rayonnement énergétique pulsé ou l'intensité et la vitesse d'avance comme paramètres de procédé du rayonnement énergétique continu, de manière à ce que le matériau ne soit que pendant une période comprise entre 5 ns et 500 ns à l'état liquide fondu, de sorte que les bords de rugosité et/ou les pointes de rugosité (2) de la surface métallique (1) soient arrondis avec le rayonnement énergétique par une fusion de courte durée sans enlèvement de matière.

2. Procédé selon la revendication 1, **caractérisé en ce que** la au moins une surface métallique (1) avant le traitement avec le rayonnement énergétique a été meulé et/ou aiguisé avec un procédé mécanique.

3. Procédé selon une des revendications 1 ou 2, **caractérisé en ce que** le traitement est effectué avec un rayonnement énergétique pulsé, dans lequel la durée d'impulsion et la densité d'énergie du rayonnement énergétique sont choisies de sorte qu'une profondeur de structure de la microrugosité soit réduite de moins de 50% par le traitement.

4. Procédé selon une quelconque des revendications 1 ou 2, **caractérisé en ce que** le traitement est effectué avec un rayonnement énergétique continu, dans lequel l'intensité du rayonnement énergétique et la vitesse d'avance avec laquelle un faisceau énergétique est guidé lors du traitement sur la surface métallique (1), est choisie de sorte qu'une profondeur de structure de la microrugosité soit réduite de moins de 50% par le traitement.

5. Procédé selon une des revendications 1 à 4, **caractérisé en ce que** le rayonnement laser est utilisé comme rayonnement énergétique.

6. Procédé selon une des revendications 1 à 5, **caractérisé en ce que** le traitement est effectué sous un gaz protecteur inerte pour la surface métallique (1) .

Fig. 1

Fig. 2

Fig. 3

unbearbeitet                    kantenverrundet

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219934